# EUROPÄISCHE PATENTANMELDUNG

(11) **EP 3 795 042 A1**
(43) Veröffentlichungstag der Anmeldung: **24.03.2021**
(21) Anmeldenummer: 20186568.0
(22) Anmeldetag: 17.07.2020
(51) Int. Cl.: A47J 47/14, A47J 39/00, F25D 31/00, A47J 41/00

(54) **VERFAHREN UND VORRICHTUNG ZUM AUFBEWAHREN VON SPEISEN**

(30) Priorität: 20.09.2019 DE 102019006613
(71) Anmelder: Partyservice Mues GmbH & Co. KG, 59872 Meschede (DE)
(72) Erfinder: MUES, Marcus, 59872 Meschede (DE); SCHRÖDER, Jürgen, 59909 Bestwig (DE)
(74) Vertreter: Rätsch, Caroline

(57) **Zusammenfassung**

Die Vorrichtung zum Aufbewahren von vorzugsweise vorab zubereiteten Speisen umfasst einen isolierten Behälter, der einen mit einer Tür (2) verschließbaren Innenraum zur Aufnahme der Speisen aufweist, wobei der Behälter ein Kühlmodul (16; 17) zum aktiven Kühlen der Speisen aufweist, und wobei der Behälter ferner ein Heizmodul (8; 9) zum Aufwärmen der Speisen aufweist. Durch die erfindungsgemäße Vorrichtung können Speisen in dem Behälter gekühlt und erst unmittelbar vor dem Verzehr in demselben Behälter erwärmt werden.

## Beschreibung

Die Erfindung betrifft ein Verfahren zum Aufbewahren von Speisen gemäß dem Oberbegriff des Anspruchs 1. Darüber hinaus betrifft die Erfindung eine Vorrichtung zum Aufbewahren von Speisen. Die aufzubewahrenden Speisen sind vorzugsweise jeweils vorab zubereitet worden.

Die erfindungsgemäße Vorrichtung ist insbesondere zur Durchführung des erfindungsgemäßen Verfahrens geeignet bzw. das erfindungsgemäße Verfahren kann insbesondere mit Hilfe der erfindungsgemäßen Vorrichtung durchgeführt werden.

Aus dem Stand der Technik sind eine Vielzahl an Containern und Boxen für den Transport von Speisen bekannt. Diese kommen immer dann zum Einsatz, wenn die Zubereitung einer Speise an einem Ort erfolgt, an dem sie nicht verzehrt wird. Die Zubereitung kann beispielsweise in einer Großküche oder in einem Restaurant erfolgen, das anschließend selbst oder über einen Lieferdienst die zubereitete Speise ausliefert. Auf diese Weise können beispielsweise Kantinen, Krankenhäuser, Seniorenheime oder Kindertagesstätten mit Essen versorgt werden.

Vorab zubereitete Speisen können warm oder kalt ausgeliefert werden. Dies hängt unter anderem davon ab, ob die Speisen warm oder kalt verzehrt werden. Entscheidend ist auch, wie lang der Zeitraum zwischen der Zubereitung und dem Verzehr der Speisen ist. Ist dieser Zeitraum kurz, kann ein einfacher Transportbehälter für den Transport genutzt werden, der lediglich eine Isolierung aufweist, um die Temperatur der Speisen kurzzeitig zu halten. Ist der Zeitraum eher lang, kann es erforderlich sein, die Speisen nach ihrer Zubereitung herunter zu kühlen und kühl zwischenzulagern bevor sie zum Zielort des Verzehrs gebracht werden. Das Aufwärmen der Speisen erfolgt dann in der Regel erst kurz vor dem Verzehr, insbesondere am Ort des Verzehrs. In der Regel steht hierfür am Ort des Verzehrs bzw. der Essensausgabe ein Heißluftofen oder ein Konvektomat zur Verfügung.

Nach dem Lebensmittelrecht sind Betriebe, die Lebensmittel herstellen, behandeln, verarbeiten und/oder in Verkehr bringen zur Eigenkontrolle verpflichtet. Die Eigenkontrolle erfolgt in der Regel nach dem HACCP-Konzept, wobei "HACCP" für "Hazard Analysis Critical Control Point" steht und ein vorbeugendes System ist, das Lebensmittelsicherheit gewährleisten soll. Die Betriebe müssen zudem nachweisen können, dass sämtliche Pflichten aus dem Lebensmittelrecht eingehalten wurden, so dass neben der Eigenkontrolle die Dokumentation ebenfalls eine wichtige Rolle spielt.

Zur Einhaltung von gesetzlichen und/oder behördlichen Vorgaben bei der Behandlung von Speisen sind Unternehmen, die Speisen anbieten, in ihren Abläufen beschränkt.

Der vorliegenden Erfindung liegt die **Aufgabe** zugrunde, Betrieben, die Lebensmittel behandeln, die Einhaltung der gesetzlichen und/oder behördlichen Vorgaben zu vereinfachen und insbesondere die Flexibilität der Abläufe bis zum Verzehr der Speisen zu erhöhen.

Zur **Lösung** dieser Aufgabe werden das Verfahren mit den Merkmalen des Anspruchs 1 sowie die Vorrichtung mit den Merkmalen des Anspruchs 7 vorgeschlagen. Vorteilhafte Weiterbildungen der Erfindung sind den jeweiligen Unteransprüchen zu entnehmen.

Bei dem vorgeschlagenen Verfahren zum Aufbewahren von vorzugsweise vorab zubereiteten Speisen werden die Speisen in einen isolierten Behälter eingebracht und gekühlt. Erfindungsgemäß werden die Speisen mit Hilfe eines Kühlmoduls des Behälters aktiv gekühlt.

Durch das aktive Kühlen können Temperaturen erreicht bzw. gehalten werden, die es ermöglichen, vorab zubereitete Speisen über einen längeren Zeitraum im Behälter aufzubewahren. Dies gestattet es besonders vorteilhaft, dass die Speisen auch schon am Vortag vor dem eigentlichen Verzehr zubereitet und geliefert werden können. Die Temperatur im Behälter darf dabei einen vorgegebenen Temperaturgrenzwert nicht überschreiten. Dieser liegt vorzugsweise bei maximal 6°C.

Bei der Zubereitung von Speisen werden diese in der Regel auf etwa 90°C erwärmt bzw. gekocht. Um auch längere Aufbewahrungszeiten zu ermöglichen, die nicht zu Lasten der enthaltenen Vitamine der Lebensmittel gehen, werden die Speisen unmittelbar nach der Zubereitung schnell heruntergekühlt, beispielsweise auf 3°C. Die vorab zubereiteten Speisen werden vorzugsweise in diesem Fall bereits vorgekühlt in den Behälter eingebracht. Dies hat den Vorteil, dass das Kühlmodul des Behälters nicht die gesamte Kühlleistung zum Herunterkühlen der Speisen erbringen muss, sondern ggf. nur die, die zur Kühlhaltung der Speisen erforderlich ist.

Erfindungsgemäß werden die Speisen vor ihrer Entnahme aus dem Behälter mit Hilfe eines Heizmoduls des Behälters aufgewärmt. Dadurch können die Speisen erst am Ort des Verzehrs bzw. der Essensausgabe aufgewärmt werden. Dies hat den erheblichen Vorteil, dass die Lieferung zeitlich deutlich vor dem Verzehr bzw. der Essensausgabe erfolgen kann. Es ist also beispielsweise möglich, das Essen bereits am Vortag vor dem geplanten Verzehr zuzubereiten. Nach ihrer Abkühlung werden die Speisen in den erfindungsgemäßen Behälter gebracht, wo sie unter Einhaltung der gesetzlichen/behördlichen Bestimmungen durch das Kühlmodul gekühlt werden. Hierbei kann die erfindungsgemäße Vorrichtung bereits am Ort des geplanten Verzehrs stehen. Erst kurz vor dem Verzehr werden die Speisen erwärmt. Dies hat erhebliche logistische Vorteile.

Bei dem Transport der Speisen zum Ort des Verzehrs sind zwei Fälle denkbar. Entweder werden die Speisen in der erfindungsgemäßen Vorrichtung zum Zielort gebracht. Die Speisen können während des Transports in der erfindungsgemäßen Vorrichtung gekühlt werden. Sofern der Transportweg kurz ist, ist eine aktive Kühlung nicht notwendig. Dann reicht ggf. die Isolierung des Behälters zur Kühlhaltung der Speisen aus. Alternativ steht die erfindungsgemäße Vorrichtung bereits am Zielort. Dann werden die Speisen nach ihrer Zubereitung gekühlt zu der erfindungsgemäßen Vorrichtung gebracht und in den Behälter gegeben. In beiden Fällen wird die Flexibilität gegenüber herkömmlichen Verfahren deutlich erhöht.

Der Zeitpunkt des Verzehrs bzw. der Essensausgabe bestimmt, wann mit dem Aufwärmen begonnen wird. Da der Zeitpunkt der Essensausgabe in der Regel feststeht, können die notwendige Aufwärmzeit und damit der Beginn der Aufwärmphase ermittelt werden, so dass zu diesem Zeitpunkt das Heizmodul automatisch aktiviert wird.

In der Regel ist ein langsames Aufwärmen der im Behälter aufgenommenen Speisen erwünscht, um die Inhaltsstoffe zu schonen und/oder ein Anbacken der Speisen zu verhindern. Ein langsames Aufwärmen verhindert außerdem ein Austrocknen der Oberfläche der Speisen, insbesondere von Soßen. Vorzugsweise wird beim Aufwärmen eine Temperatur der Speisen zwischen 50°C und 90°C, vorzugsweise zwischen 60°C und 80°C und weiterhin vorzugsweise zwischen 68°C und 75°C erreicht. Diese Temperaturen entsprechen den üblichen Ausgabetemperaturen von warmen Speisen. Bei der Durchführung des Verfahrens kommt demnach ein Heizmodul zum Einsatz, das eine entsprechend hohe Heizleistung zu erbringen vermag. Das Heizmodul des Behälters ersetzt somit den Heißluftofen bzw. Konvektomaten am Ort der Essensausgabe. Erfindungsgemäß kommt für die Kühlung und die Erwärmung lediglich ein Behälter zum Einsatz. Der erfindungsgemäße Behälter ist also in der Lage, sowohl zu kühlen als auch zu heizen.

Vorteilhafterweise wird zum Kühlen und/oder Aufwärmen der Speisen entsprechend temperierte Luft in dem Behälter zirkuliert. Zum Kühlen wird gekühlte Luft und zum Aufwärmen wird aufgeheizte Luft in einen Innenraum des Behälters eingeblasen. In dem Innenraum sind die Speisen aufgenommen. Zum Einblasen der entsprechend temperierten Luft kann jeweils ein Gebläse verwendet werden. Gekühlte Luft wird vorzugsweise mindestens in einen oberen Bereich des Behälters eingeblasen, da diese durch natürliche Konvektion im Behälter nach unten fällt. Aufgeheizte Luft wird vorzugsweise mindestens in einen unteren Bereich des Behälters eingeblasen, um die natürliche Konvektion weiter zu fördern. Die Gebläse unterstützen ebenfalls die Konvektion.

Das Prinzip der Erwärmung von Speisen durch zirkulierende erwärmte Luft ist grundsätzlich bekannt und wird beispielsweise bei einem Konvektomaten eingesetzt. Hierbei handelt es sich um einen Heißluftofen, der insbesondere im Gastronomiebereich zum Aufwärmen von Speisen eingesetzt wird. Der zur Durchführung des erfindungsgemäßen Verfahrens vorgeschlagene Behälter erfüllt demnach nicht nur die Funktion einer Kühlbox, sondern zugleich die Funktion eines Konvektomats. Ein Aufbewahren und/oder Transportieren von Speisen kann somit sehr viel effizienter durchgeführt werden. Ferner kann die Essensausgabe an einem beliebigen Ort erfolgen, da dieser nicht mit einem stationären Konvektomaten oder dergleichen ausgestattet sein muss. Insbesondere werden durch die Kühl- und Heizfunktion des erfindungsgemäßen Behälters erhebliche logistische Vorteile erzielt. Dies gilt für den Zeitpunkt der Zubereitung der Speisen und den Zeitpunkt der Lieferung. Durch die gewonnene Flexibilität können Transportfahrzeuge, Lieferzeit und Personal eingespart werden.

Vorzugsweise wird die Temperatur im Behälter und/oder die Kerntemperatur der Speisen bis zur Entnahme der Speisen aus dem Behälter erfasst und aufgezeichnet. Vorteilhafterweise erfolgt die Erfassung und Aufzeichnung durchgehend oder in vorgegebenen regelmäßigen Zeitabständen.

Dadurch, dass beim Aufbewahren der Speisen (was auch ein eventuelles Transportieren der Speisen in dem Behälter einschließt) die Temperatur erfasst und aufgezeichnet wird, kann die Einhaltung eines vorgegebenen, insbesondere gesetzlich vorgeschriebenen, Temperaturgrenzwerts überwacht werden. Hierdurch wird eine Kontrollfunktion ermöglicht. Die Temperatur wird vorzugsweise jedoch nicht nur kontrolliert, sondern bevorzugt zugleich durch Aufzeichnen dokumentiert. Dies ermöglicht den Nachweis über die Einhaltung etwaiger gesetzlich vorgeschriebener Werte.

Die Temperatur wird vorzugsweise mit Hilfe mindestens eines Temperatursensors und/oder mindestens eines Temperaturfühlers erfasst. Mindestens ein Temperatursensor kann zur Erfassung der Temperatur im Behälter eingesetzt werden. Vorzugsweise wird der Temperatursensor dort angeordnet, wo die heiße Luft in den Innenraum eintritt. Alternativ oder zusätzlich kann ein Temperatursensor dort angeordnet sein, wo die kalte Luft in den Innenraum eintritt. Durch den mindestens einen Temperatursensor wird überwacht, ob der Innenraum des Behälters erwärmt bzw. gekühlt wird. Ist dies nicht der Fall - beispielsweise bei einem Systemfehler - kann eine Fehlermeldung erfolgen, beispielsweise in Form eines optischen und/oder akustischen Signals.

Mit Hilfe mindestens eines Temperaturfühlers kann insbesondere die Kerntemperatur der im Behälter aufgenommenen Speisen erfasst werden. Vorzugsweise sind mehrere Temperaturfühler vorgesehen, um diese verteilt anzuordnen und/oder verschiedenen Speisen zuzuordnen. Zur Kerntemperaturmessung wird vorzugsweise der Temperaturfühler in die jeweilige Speise hineingesteckt. Das Erfassen der Kerntemperatur der Speisen ermöglicht eine besonders genaue Temperaturüberwachung. Vorzugsweise ist der mindestens eine Temperaturfühler mit einem Kabel verbunden. Dies ermöglicht eine örtliche Flexibilität der Temperaturfühler. In diesem Zusammenhang sei darauf hingewiesen, dass der erfindungsgemäße Behälter mehrere Schienen aufweisen kann, die zur Aufnahme von Speisenbehältnissen, z.B. von Speisewannen, dienen. Die Speisenbehältnisse werden also zweckmäßig in verschiedenen Ebenen des Behälters aufgenommen. Jeder Ebene ist dann vorzugsweise mindestens ein Temperaturfühler zugeordnet.

Zum Aufzeichnen der erfassten Temperatur wird vorzugsweise ein Datenaufzeichnungssystem verwendet. Dieses kann vorteilhaft in den Behälter integriert sein. Bevorzugt werden die erfassten Temperaturdaten in einem Datenspeicher des Datenaufzeichnungssystems gespeichert, wobei der Datenspeicher in den Behälter integriert sein kann. Ferner kann vorgesehen sein, dass der in den Behälter integrierte Datenspeicher über eine Kommunikationsschnittstelle verfügt. Auf diese Weise kann der Datenspeicher ausgelesen werden. Vorzugsweise überträgt die Kommunikationsschnittstelle die Daten insbesondere drahtlos an ein externes System. Dies eröffnet die Möglichkeit, dass der Behälter fernüberwacht wird, wenn er sich nicht mehr im Betrieb des Verantwortlichen befindet. Zudem wird eine Manipulation der Daten durch Dritte erschwert und somit die Lebensmittelsicherheit weiter erhöht.

Mit der Temperatur wird vorzugsweise zugleich die Zeit, insbesondere das jeweilige Datum und die Uhrzeit, erfasst und aufgezeichnet. Anhand dieser Daten kann ein Protokoll erstellt werden, das Nachweis darüber gibt, dass die gesetzlichen Vorgaben eingehalten wurden.

Das vorgeschlagene Verfahren zum Aufbewahren von Speisen läuft vorzugsweise vollständig automatisiert ab. Lediglich das Einbringen der Speisen in den Behälter muss ggf. noch manuell durchgeführt werden. Die gesetzlich geforderte Eigenkontrolle eines Betriebs, der Lebensmittel behandelt, insbesondere aufbewahrt, hängt somit nicht davon ab, dass sich der Behälter noch im Einflussbereich des jeweiligen Betriebs befindet. Die Eigenkontrolle kann selbst dann geleistet werden, wenn der Behälter bereits beim Abnehmer der Speisen ist. Dies garantiert eine hohe Lebensmittelsicherheit.

Wird der Behälter vor einem zuvor festgelegten Zeitpunkt geöffnet, kann dies erfasst und/oder eine Fehlermeldung ausgegeben werden. Gleiches gilt bei einem Ausfall oder Fehler des Kühlmoduls, so dass die erforderliche Kühlung nicht mehr gewährleistet ist.

Des Weiteren wird vorgeschlagen, dass das Kühlen und/oder Aufwärmen der Speisen mit Hilfe einer Steuereinheit des Behälters gesteuert wird, die vorzugsweise programmierbar ist. Die Steuereinheit, insbesondere die programmierbare Steuereinheit, ermöglicht einen hohen Automatisierungsgrad. Beispielsweise können Temperaturgrenzwerte, die Kühldauer, der Zeitpunkt der Fertigstellung der Zubereitung der Speisen und/oder die Heizdauer festgelegt und einprogrammiert werden. Die Parameter hängen von der Art der Speisen ab. Sofern sich der erfindungsgemäße Behälter bereits am Zielort befindet, was dem Regelfall entspricht, werden die Speisen nach ihrem Transport zum Zielort in den Behälter gegeben und dort die Parameter entsprechend eingestellt, sofern sie nicht bereits voreingestellt sind. Beispielsweise kann der Zeitpunkt der Fertigstellung der Speisen eingestellt werden. Aus diesem Zeitpunkt kann der Beginn der Aufwärmphase errechnet werden. Das Verfahren läuft dann vollständig automatisch ab, wobei die Steuereinheit den Ablauf steuert. Zum Zeitpunkt der Fertigstellung der Speisen kann ein Signal erzeugt werden.

Bevorzugt wird das Kühlmodul oder das Heizmodul derart angesteuert, dass eine vorbestimmte Temperatur erreicht und/oder gehalten wird. Das heißt, dass die Temperatur fortlaufend überwacht wird und bei einer detektierten Temperaturänderung das Kühlmodul oder das Heizmodul angesteuert wird, um stärker zu kühlen bzw. aufzuheizen, so dass die voreingestellte Temperatur wieder erreicht wird.

Darüber hinaus wird zur **Lösung** der eingangs genannten Aufgabe eine Vorrichtung zum Aufbewahren von vorzugsweise vorab zubereiteten Speisen vorgeschlagen. Während der Aufbewahrung erfolgt eine Temperaturbehandlung. Die vorgeschlagene Vorrichtung umfasst einen isolierten Behälter, der einen Innenraum zur Aufnahme der Speisen aufweist. In dem Innenraum können die Speisen aufbewahrt werden. Der Innenraum ist durch eine Tür verschließbar.

Erfindungsgemäß weist der Behälter ein Kühlmodul zum aktiven Kühlen der Speisen auf. Ferner weist der Behälter ein Heizmodul zum Aufwärmen der Speisen auf. Vorzugsweise werden die Speisen in dem Innenraum zunächst gekühlt und anschließend erwärmt.

Der Behälter kann somit zum Kühlen und Aufwärmen von Speisen eingesetzt werden. Dies macht einen Heißluftofen oder Konvektomaten am Ort der Essensausgabe entbehrlich. Damit kann der Behälter besonders vielseitig eingesetzt werden. Insbesondere können die Speisen an beliebige Orte geliefert und dort zunächst gekühlt und erst kurz vor dem Verzehr auf Ausgabetemperatur aufgewärmt werden. Die erfindungsgemäße Vorrichtung erhöht die zeitliche und örtliche Flexibilität in der Logistik erheblich. Es ist lediglich ein Stromanschluss erforderlich.

Die vorgeschlagene Vorrichtung weist vorzugsweise alle Komponenten zur Durchführung des zuvor beschriebenen erfindungsgemäßen Verfahrens auf, so dass sie insbesondere zur Durchführung des Verfahrens geeignet ist. Mit Hilfe der Vorrichtung lassen sich demnach die gleichen Vorteile erzielen wie mit Hilfe des Verfahrens. Insbesondere wird die Einhaltung der gesetzlichen Vorgaben hinsichtlich der Aufbewahrung von Lebensmitteln gewährleistet. Eine Hauptbedingung ist, dass die Lebensmittel bzw. Speisen gekühlt werden, so dass ein vorgegebener Temperaturgrenzwert nicht überschritten wird. Um dies zu ermöglichen, weist der Behälter der vorgeschlagenen Vorrichtung ein Kühlmodul auf, mit dessen Hilfe die Speisen aktiv gekühlt werden können.

Gemäß einer bevorzugten Ausgestaltung der Erfindung umfasst das Kühlmodul mindestens einen thermoelektrischen Wandler und ein Gebläse. Bei dem elektrothermischen Wandler kann es sich insbesondere um ein Peltier-Element handeln. Ein derartiger thermoelektrischer Wandler erzeugt bei Stromdurchfluss eine Temperaturdifferenz und kann somit - abhängig von der Stromrichtung - zum Kühlen oder Heizen eingesetzt werden. Vorliegend wird der thermoelektrische Wandler bzw. das Peltier-Element zum Kühlen verwendet. Das Gebläse dient der Verteilung der mit Hilfe des thermoelektrischen Wandlers gekühlten Luft, so dass die im Innenraum des Behälters aufgenommenen Speisen möglichst gleichmäßig gekühlt werden, und zwar unabhängig davon, ob sie näher oder weiter entfernt vom Kühlmodul aufbewahrt werden. Als Gebläse findet vorzugsweise ein Querstromgebläse Einsatz, da dieses besonders platzsparend verbaut werden kann. Gleichzeitig stellt ein Querstromgebläse eine ausreichende Leistung zur Verfügung. Vorzugsweise wird mittels des Querstromgebläses Luft axial angesaugt und radial ausgelassen, oder umgekehrt. Es wurde gefunden, dass die Kombination eines Peltier-Elements zusammen mit einem Querstromgebläse optimal für die erfindungsgemäße Vorrichtung einsetzbar ist. Insbesondere ermöglicht diese Kombination auch eine Integration des Kühlmoduls in eine Tür des Behälters, wie es im Folgenden noch näher ausgeführt wird.

Vorzugsweise ist der thermoelektrische Wandler als Peltier-Element ausgebildet, das auf einer Seite (des Peltier-Elements) mit Kühlrippen zusammenwirkt. Die Kühlrippen sind aufgrund ihrer vergrößerten Oberfläche besonders gut in der Lage, die durch das Gebläse transportierte Luft zu kühlen. Sie verstärken also vorteilhaft die Wirkung des Peltier-Elements.

Bevorzugt wirkt das Peltier-Element auf seiner anderen Seite mit einer Wasserkühlung zusammen, die eine Pumpe, Kühlmittelschläuche und mindestens einen Radiator umfasst. Es wurde gefunden, dass durch eine zusätzliche Kühlung des Peltier-Elements auf seiner im Betrieb heißen Seite der Wirkungsgrad des Peltier-Elements erhöht werden kann. Durch diese Wirkungsgraderhöhung können die übrigen Bauteile des Kühlmoduls relativ klein gehalten werden, was eine Unterbringung des Kühlmoduls in der Tür der erfindungsgemäßen Vorrichtung erleichtert. Der Radiator kann an einer Außenseite der Tür angeordnet sein. Hier kann die warme Luft abgegeben werden.

Vorstehend wurde bereits angesprochen, dass es vorteilhaft ist, das Kühlmodul mit Kühlrippen auszustatten. Zwischen den Kühlrippen sind Zwischenräume ausgebildet.
Vorteilhafterweise definieren die Zwischenräume mit dem Gebläse einen Strömungsweg. Die zu kühlende Luft wird also im Kühlbetrieb durch die Zwischenräume an den Kühlrippen vorbeibewegt und erfährt so vorteilhaft die gewünschte Kühlung. Hierbei kann das Gebläse als Saug- oder Druckluftgebläse ausgebildet sein.

Eine vorteilhafte Ausführungsform der Erfindung ist dadurch gekennzeichnet, dass zwischen dem Peltier-Element und den Kühlrippen eine Platte ausgebildet ist, die den Strömungsweg begrenzt. Der Platte können zwei Aufgaben zukommen. Zum einen verteilt sie die die Kühlleistung des Peltier-Elements über den gesamten Rippenquerschnitt. Zum anderen begrenzt sie den Strömungsweg der zu kühlenden Luft. Letztere wird hierdurch vorteilhaft durch die Zwischenräume hindurchgesogen oder -geblasen.

Während des Betriebs (und teilweise auch danach) kann Kondenswasser anfallen. Wenn Kondenswasser zu lange in einem System verweilt, können sich Keime bilden. Vor diesem Hintergrund wird vorgeschlagen, dass die Kühlrippen im aufgestellten Zustand der Vorrichtung vertikal angeordnet sind. Hierdurch kann das Kondenswasser aufgrund der Schwerkraft nach unten laufen. In Weiterbildung der Erfindung wird vorgeschlagen, dass das Kühlmodul eine Auffangwanne aufweist. Diese ist vorzugsweise unterhalb der Kühlrippen angeordnet. Durch die Auffangwanne ist es möglich, das Kondenswasser aufzufangen und zu sammeln. Hierdurch wird ein Eintreten in die Isolierung wirkungsvoll unterbunden.

Die Auffangwanne kann einen Ablauf aufweisen. Durch den Ablauf wird das Kondensat vorteilhaft aus der Auffangwanne abgeführt.

Bevorzugt umfasst das Heizmodul mindestens ein Heizelement und ein Gebläse. Mit Hilfe des Heizmoduls kann demnach vorteilhaft Luft angesaugt, erwärmt und wieder in den Innenraum des Behälters eingeblasen werden. Nach diesem Prinzip arbeiten in der Regel herkömmliche Haushaltsbacköfen, wobei das Heizelement häufig ein Heizstab, eine Heizwendel oder eine Heizspirale ist. Ein Heizstab, eine Heizwendel oder eine Heizspirale kann auch bei der vorgeschlagenen Vorrichtung als Heizelement eingesetzt werden. Dies ist insoweit besonders vorteilhaft, als sich ein derartiges Heizelement einfach in den Behälter, insbesondere in die Tür des Behälters, integrieren lässt. Das Gebläse des Heizmoduls ist vorzugsweise ein Axialgebläse. Axialgebläse sind ebenfalls aus Backöfen bekannt und können einfach in eine Tür integriert werden, wie es als vorteilhaft angesehen wird.

Eine vorteilhafte Ausführungsform der Erfindung ist dadurch gekennzeichnet, dass in die Tür des Behälters sowohl das Heizmodul als auch das Kühlmodul integriert ist. Ein wesentlicher Vorteil besteht darin, dass sämtliche wichtige Komponenten beim Öffnen der Tür zugänglich sind, beispielsweise für eine Inspektion oder Reparatur. Außerdem kann im Reparaturfall eine Tür mit defekten Komponenten gegen eine intakte Tür ausgetauscht werden. Hierzu ist die Tür vorteilhafterweise lösbar mit dem übrigen Teil des Behälters verbunden, beispielsweise durch ein Schraubgelenk. Alternativ oder zusätzlich weist die Tür einen Türkorpus und eine Rückwand auf, die über ein Scharnier verbunden sind. Hierdurch ist die Rückwand abklappbar, so dass zu Reparatur- oder Inspektionszwecken die Rückwand geöffnet wird, um Zugang zu den einzelnen Komponenten zu bekommen.

Wie bereits vorstehend ausgeführt, umfasst das Heizmodul vorteilhafterweise ein Gebläse und ein Heizelement. Das Gebläse hat die Aufgabe, Luft aus dem Innenraum des Gehäuses abzusaugen, an dem Heizelement vorbeizuführen und anschließend die erwärmte Luft in den Innenraum einzuleiten. Als besonders vorteilhaft wird es angesehen, wenn hierzu das Heizelement und das Gebläse über einen ersten Strömungskanal in Strömungsverbindung stehen, wobei der Strömungskanal in der Tür angeordnet ist. Zweckmäßig bildet der Strömungskanal mindestens eine in der Tür ausgebildete erste Einlassöffnung. Hierdurch kann erwärmte Luft in den Innenraum eingelassen werden.

Alternativ oder zusätzlich kann in der Tür mindestens eine zweite Einlassöffnung ausgebildet sein, die dem Kühlmodul zugeordnet ist. Insbesondere kann vorgesehen sein, dass der zweite Strömungskanal den thermoelektrischen Wandler und das zugehörige Gebläse miteinander strömungstechnisch verbindet, so dass vom thermoelektrischen Wandler gekühlte Luft in den Innenraum geblasen werden kann. Der thermoelektrische Wandler kann in der zweiten Einlassöffnung angeordnet sein, insbesondere in der zweiten Einlassöffnung sitzen. Er kann auch zwischen dem Gebläse und der zweiten Einlassöffnung angeordnet sein. Auch möglich ist (in Strömungsrichtung) eine Anordnung vor dem Gebläse. Vorzugsweise wird durch das Gebläse Luft aus dem Innenraum angesaugt und an dem thermoelektrischen Wandler vorbei - gekühlt - wieder in den Innenraum geblasen.

In diesem Zusammenhang wird darauf hingewiesen, dass es sich bei dem Peltier-Element um den eigentlichen elektrothermischen Wandler handelt. Dieser befindet sich vorteilhafterweise nicht unmittelbar im Strömungsweg der zu kühlenden Luft. Sofern Kühlrippen zum Einsatz kommen, können diese als Bestandteil des elektrothermischen Wandlers angesehen werden.

Ferner kann auch eine Auslassöffnung in der Tür ausgebildet sein, die dem thermoelektrischen Wandler zugeordnet ist. Durch die Auslassöffnung wird Luft aus dem Innenraum abgesogen und durch den zweiten Strömungskanal an dem thermoelektrischen Wandler vorbeigeführt.

Der erste und der zweite Strömungskanal sind bevorzugt strömungstechnisch unabhängig voneinander. Sie schneiden sich also nicht, so dass jeweils heiße und kalte Luft aneinander vorbeigeführt werden. Bevorzugt sind sowohl der erste als auch der zweite Strömungskanal in der Tür ausgebildet. Dies schafft eine kompakte Konstruktion.

Vorstehend wurde bereits angedeutet, dass vorteilhaft eine Auffangwanne vorgesehen sein kann. Vorzugsweise weist die Auffangwanne einen Ablauf für Kondensat auf, der mit dem ersten Strömungskanal verbunden ist. Anfallendes Kondensat wird also unmittelbar in den ersten Strömungskanal eingeleitet. Als Verbindung kann eine Leitung vorgesehen sein, die die Auffangwanne mit dem ersten Strömungskanal verbindet. Die Leitung besteht beispielsweise aus Silikon. Sobald das Heizmodul im ersten Kanal aktiviert wird, verdampft das Kondensat vorteilhaft.

Vorzugsweise ist die erste Einlassöffnung im unteren Bereich der Tür ausgebildet. Vorzugsweise ist die zweite Einlassöffnung im oberen Bereich der Tür ausgebildet. Der obere Bereich befindet sich in der oberen Hälfte der Tür und der untere Bereich befindet sich in der unteren Hälfte der Tür (jeweils im Betriebszustand des Behälters).

Eine besonders vorteilhafte Konstruktion ist dadurch gekennzeichnet, dass die erste Einlassöffnung und/oder die zweite Einlassöffnung in einer dem Innenraum zugewandten Platte der Tür ausgebildet ist. Die Platte besteht zum Beispiel aus verzinktem Metall. Die Öffnungen sind vorteilhaft in die Platte eingelasert. In diesem Zusammenhang sei angemerkt, dass die Öffnungen auch mehrteilig ausgebildet sein können, also aus mehreren kleineren Öffnungen besteht.

Ebenfalls aus konstruktiver Sicht vorteilhaft ist es, wenn der erste Strömungskanal durch einen Aufsatz begrenzt wird, der mit der Platte lösbar verbunden ist. Der erste Strömungskanal kann vorteilhaft durch die Platte und den Aufsatz definiert werden. Er ergibt sich durch Zusammenfügen der Platte und des Aufsatzes. Die Platte und der Aufsatz können miteinander verschraubt werden.

Vorzugsweise ist an dem Aufsatz das Gebläse und/oder das Heizelement angeordnet, insbesondere befestigt. Während das Heizelement und das Gebläse vorteilhafterweise in dem Kanal angeordnet sind, kann der Antrieb des Gebläses auf der Rückseite des Aufsatzes angeordnet sein. Die Antriebsachse geht dabei vorteilhaft durch den Aufsatz hindurch. Vorteilhafterweise bilden das Heizelement, das Gebläse und der Aufsatz das Heizmodul.

In Weiterbildung der Erfindung wird vorgeschlagen, dass die Vorrichtung mindestens einen Temperatursensor zum Erfassen der Temperatur im Behälter und/oder mindestens einen Temperaturfühler zum Erfassen der Kerntemperatur der Speisen umfasst. Vorteilhafterweise umfasst die erfindungsgemäße Vorrichtung ferner ein Datenaufzeichnungssystem zum Aufzeichnen der erfassten Temperaturdaten.

Mit Hilfe des mindestens einen Temperatursensors und/oder Temperaturfühlers wird die Einhaltung eines vorgegebenen Temperaturgrenzwerts überwacht. Ein Nachweis darüber, dass der Temperaturgrenzwert eingehalten wird, gelingt mit Hilfe des Datenaufzeichnungssystems, das die erfassten Temperaturdaten aufzeichnet und somit dokumentiert.

Die zur Kühlung, Erwärmung und Datenaufzeichnung erforderlichen Komponenten sind vorzugsweise in räumlicher Nähe zueinander in den Behälter integriert. Dies ermöglicht eine besonders kompakte Anordnung der Komponenten und kurze Leitungswege. Vorteilhafterweise sind alle vorgenannten Komponenten in der Tür des Behälters angeordnet. Dadurch ist eine gute Zugänglichkeit der Komponenten gewährleistet, um bei einem Fehler oder Ausfall einer Komponente diese einfach reparieren oder austauschen zu können. Darüber hinaus kann bei Bedarf die ganze Tür ausgetauscht werden, ohne den Behälter zu demontieren oder zu zerstören.

Vorteilhafterweise ist zumindest ein Temperaturfühler zur Erfassung der Kerntemperatur der im Behälter aufgenommenen Speisen vorgesehen. Die Kerntemperatur erlaubt eine besonders zuverlässige Aussage darüber, ob die Kühlung ausreichend ist oder erhöht werden muss, um vorgegebene Temperaturgrenzwerte einzuhalten. Gleiches gilt für die Erwärmung. Idealerweise sind mehrere Temperaturfühler vorgesehen, die verteilt angeordnet werden können, so dass die Kerntemperatur verschiedener im Behälter aufgenommener Speisen erfasst werden kann. Die Temperaturfühler weisen hierzu bevorzugt einen Kopf auf, der in die Speisen eingesteckt werden kann. Die Übertragung der Messdaten kann kabellos oder kabelgebunden erfolgen, wobei ein Kabel unter anderem den Vorteil besitzt, dass der kabelgebundene Temperaturfühler nicht verloren gehen kann.

Des Weiteren wird vorgeschlagen, dass in den Behälter, vorzugsweise in die Tür des Behälters, eine programmierbare Steuereinheit integriert ist. Mit Hilfe der Steuereinheit kann somit ein Temperaturgrenzwert vorgegeben und das Kühlmodul und/oder das Heizmodul derart angesteuert werden, dass dieser Temperaturgrenzwert nicht unter- bzw. überschritten wird. Wird mit Hilfe des mindestens einen Temperatursensors und/oder Temperaturfühlers eine unerwünschte Temperaturänderung detektiert, kann mit Hilfe der Steuereinheit gegengesteuert werden. Der mindestens eine Temperatursensor und/oder der mindestens eine Temperaturfühler sind daher bevorzugt mit der Steuereinheit in datenübertragender Weise verbunden. Die Steuereinheit ist vorzugsweise über Steuerleitungen mit dem Kühlmodul und/oder dem Heizmodul verbunden. Die Steuereinheit ermöglicht vorteilhaft nicht nur eine Temperatursteuerung, sondern eine Temperaturregelung, die vollständig automatisiert ablaufen kann. Das heißt, dass ein hoher Automatisierungsgrad erreicht wird. Dies gilt insbesondere dann, wenn zusätzlich auch Zeiten, beispielsweise Einschaltzeiten, Aufwärmzeiten, Kühlzeiten und/oder Fertigstellungszeiten (zu denen die Speisen verzehrbereit sind) eingestellt werden können, wie es als vorteilhaft angesehen wird.

Bevorzugt weist der Behälter eine Anzeige- und/oder Signaleinrichtung auf. Mit Hilfe der Anzeigeeinrichtung kann mindestens eine aktuelle Temperatur, insbesondere Kerntemperatur, im Inneren des Behälters angezeigt werden, und zwar ohne den Behälter öffnen zu müssen. Ferner kann der noch verbleibende Zeitraum bis zum Ablauf einer vorgegebenen maximalen Aufbewahrungsdauer angezeigt werden. Die Anzeige weiterer Parameter ist möglich. Mit Hilfe der Signaleinrichtung kann insbesondere ein Fehler oder Ausfall des Systems angezeigt werden. Das mit Hilfe der Signaleinrichtung generierte Signal kann optisch und/oder akustisch wahrnehmbar sein.

Ferner bevorzugt weist der Behälter eine Eingabeeinrichtung, insbesondere in Form eines Touch-Screens, auf. Mit Hilfe der Eingabevorrichtung kann insbesondere die Steuereinheit des Behälters programmiert werden. Beispielsweise kann ein Temperaturgrenzwert festgelegt und/oder es kann der Beginn und/oder das Ende der Aufwärmphase bestimmt werden.

Der Behälter der vorgeschlagenen Vorrichtung ist vorzugsweise im Wesentlichen quaderförmig ausgebildet. Es können somit mehrere Behälter platzsparend neben- oder aufeinander angeordnet werden, um diese gemeinsam aufzubewahren.

Weiterhin vorzugsweise ist der Behälter als Frontlader ausgeführt. Das heißt, dass er eine von vorne zu öffnende Tür besitzt. Diese ist ebenfalls wie der übrige Behälter isoliert ausgeführt. Ferner bevorzugt ist die Tür derart ausgebildet, dass sie in der Schließstellung den Behälter luftdicht verschließt.

Bevorzugt weist der Behälter einen Innenraum zur Aufnahme der Speisen auf, der im Wesentlichen ebenfalls quaderförmig ausgebildet ist. Dies ermöglicht eine gute Raumausnutzung des Aufnahmeraums, da mehrere Bleche und/oder Wannen, auf denen bzw. in denen die Speisen aufbewahrt werden, übereinander in den Innenraum eingesetzt, insbesondere eingeschoben, werden können. Das Prinzip ähnelt dem eines Backofens. Im Innenraum sind daher bevorzugt seitliche Führungen für die Bleche und/oder Wannen angeordnet.

Im Folgenden wird die Erfindung anhand eines bevorzugten Ausführungsbeispiels im Zusammenhang mit der anhängenden **Zeichnung** näher erläutert. Die Zeichnung zeigt in:
- Fig. 1: in einer schematischen Darstellung eine perspektivische Ansicht eines ersten Ausführungsbeispiels;
- Fig. 2: in einer schematischen Darstellung die Innenseite der Tür des ersten Ausführungsbeispiels;
- Fig. 3: in einer schematischen Darstellung die Außenseite (ohne Verkleidung) der Tür des ersten Ausführungsbeispiels;
- Fig. 4: in einer schematischen Darstellung eine perspektivische Ansicht eines zweiten Ausführungsbeispiels;
- Fig. 5: in einer schematischen Darstellung eine auseinandergezogene Ansicht des zweiten Ausführungsbeispiels der erfindungsgemäßen Vorrichtung mit geöffneter Tür und zusätzlich geöffneter Rückwand;
- Fig. 6: in einer schematischen Darstellung das zweite Ausführungsbeispiel der erfindungsgemäßen Vorrichtung mit eine geöffneten Rückwand;
- Fig. 7: in einer schematischen Darstellung ein Detail des zweiten Ausführungsbeispiels in einer Seitenansicht; und
- Fig. 8: in einer schematischen Darstellung eine teilgeschnittene Frontansicht des Details nach Figur 7.

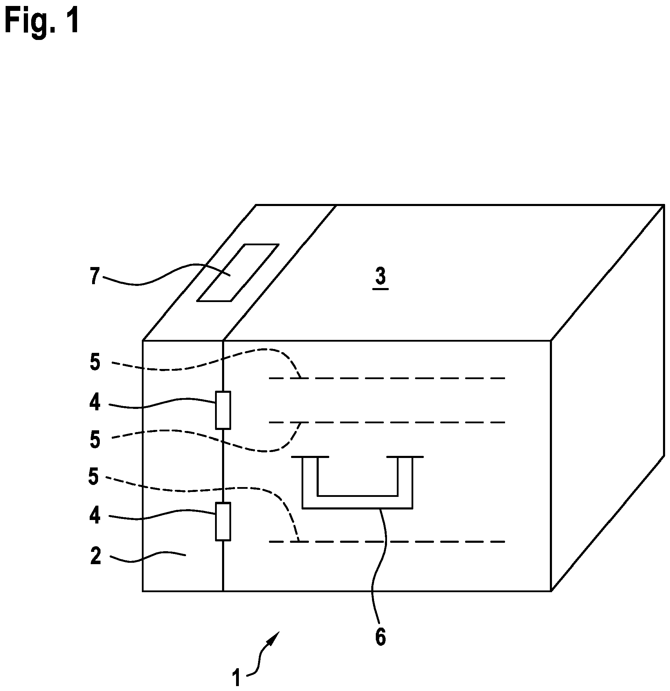

Figur 1 zeigt eine erfindungsgemäße Vorrichtung in einer perspektivischen Darstellung. Die Vorrichtung umfasst einen Behälter 1, der eine Tür 2 aufweist. Die Tür 2 ist mit einem Aufnahmekörper 3 schwenkbar verbunden, und zwar über Gelenke 4. Die Tür 2 und der Aufnahmekörper 3 begrenzen einen Innenraum, in dem Speisen aufgenommen werden können. Im Innenraum weist der Behälter 1 Schienen 5 auf, die lediglich schematisch angedeutet sind. In die Schienen 5 können Wannen oder dergleichen für die Speisen eingeschoben werden.

Die Vorrichtung ist transportabel. Hierzu weist der Behälter 1 beidseitige Handgriffe 6 auf.

Mit dem Bezugszeichen 7 ist ein Display gekennzeichnet, mittels dessen die Vorrichtung programmiert werden kann, wie es im Folgenden noch näher ausgeführt wird. Das Display 7 kann auch als Anzeige für Fehlermeldungen etc. dienen. Die Anordnung des Displays 7 auf der Oberseite der Tür 2 ist rein exemplarisch. Es kann auch stirnseitig an der Tür 2 oder an dem Aufnahmekörper angeordnet sein.

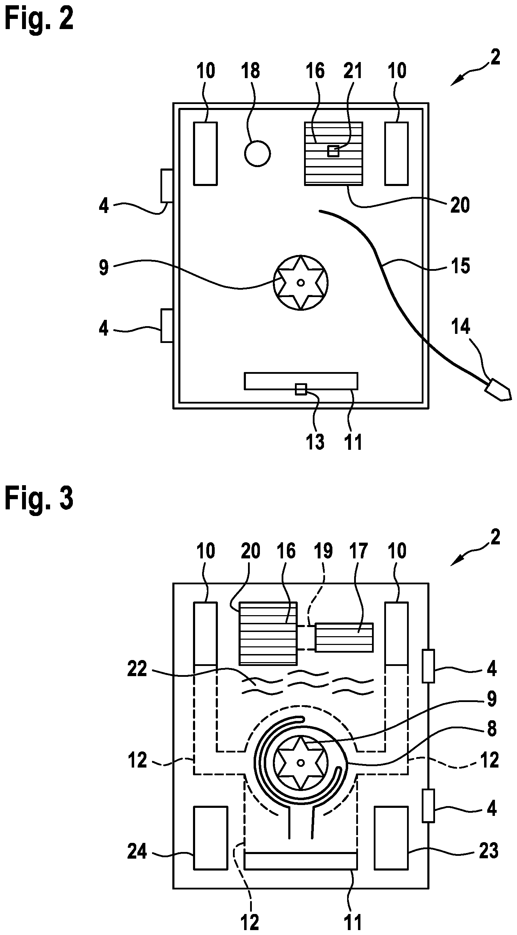

Figur 2 zeigt - ebenfalls schematisch - die Innenseite der Tür 2, die im geschlossenen Zustand dem Innenraum des Behälters 1 zugewandt ist. Figur 3 zeigt die andere (Außen-) Seite der Tür, wobei zur besseren Darstellung der Komponenten die äußere Abdeckung weggelassen ist.

In der Tür 2 ist ein Heizmodul und ein Kühlmodul angeordnet. Das Heizmodul weist ein Heizelement 8 (siehe Figur 3) sowie ein Gebläse 9 auf. Das Gebläse 9 zieht Luft aus dem Innenraum des Behälters 1 heraus, leitet die Luft an dem Heizelement 8 (Figur 3) vorbei und gibt die so erwärmte Luft über erste Einlassöffnungen 10, 11 wieder in den Innenraum ab. Hierzu sind die ersten Einlassöffnungen 10, 11 über einen ersten Strömungskanal 12 mit dem Gebläse 9 und dem Heizelement 8 strömungstechnisch verbunden, der in Figur 3 lediglich strich-liniert angedeutet ist. Vorzugsweise ist der erste Strömungskanal 12 in der Tür 2 ausgebildet. Damit eine optimale Verteilung der aufgeheizten Luft erreicht werden kann, ist mindestens eine untere Einlassöffnung 11 vorgesehen. Als besonders vorteilhaft wird es angesehen, wenn zusätzlich auch mindestens eine obere Einlassöffnung 10, insbesondere zwei obere Einlassöffnungen 10 vorgesehen sind.

Vorzugsweise ist an der Einlassöffnung 11 ein Temperatursensor 13 angeordnet. Durch ihn wird die Temperatur der in den Innenraum einströmenden Luft gemessen und die Funktion des Heizmoduls überwacht.

Zusätzlich ist mindestens ein Temperaturfühler 14 vorgesehen, der in die Speisen gesteckt wird. Hierdurch wird die Kerntemperatur der Speisen erfasst. Der Temperaturfühler 14 ist am Ende eines Kabels 15 angeordnet, das eine örtliche Flexibilität gewährleistet. Im Übrigen können auch mehrere Temperaturfühler 14 vorgesehen sein, und zwar insbesondere dann, wenn der Behälter 1 dafür ausgelegt ist, auf mehreren Ebenen Speisen aufzunehmen.

In der Tür 2 ist ferner ein Kühlmodul angeordnet. Das Kühlmodul weist einen thermoelektrischen Wandler 16, der vorliegend als Peltier-Element ausgebildet ist, sowie ein Gebläse 17 auf, das vorzugsweise als Querstromgebläse ausgebildet ist. Das Gebläse 17 zieht Luft aus dem Innenraum des Behälters 1 durch eine Auslassöffnung 18 (Figur 2) heraus. Die Luft wird über einen zweiten Kanal 19 (Figur 3) an dem thermoelektrischen Wandler 16 vorbeigeleitet, dort gekühlt und wieder in den Innenraum eingeführt. Hierzu ist vorzugsweise in der Tür eine (zweite) Einlassöffnung 20 ausgebildet. Der thermoelektrische Wandler 16 kann in der (zweiten) Einlassöffnung 20 sitzen, wie es vorliegend als vorteilhaft dargestellt ist. Alternativ und ebenfalls vorteilhat ist es, wenn der thermoelektrische Wandler 16 in dem zweiten Kanal 19 angeordnet ist. Das Kühlmodul wird durch einen Sensor 21 überwacht.

Mit dem Bezugszeichen 22 ist eine Dämmung angedeutet, die sich flächig über die Tür erstreckt und die vorgenannten Komponenten thermisch voneinander isoliert, aber auch den Innenraum nach außen isoliert.

Das Heizmodul und das Kühlmodul werden über eine Steuereinheit 23 gesteuert. Über das eingangs genannte Display 7 kann die Steuereinheit 23 programmiert werden. Über ein Datenaufzeichnungssystem 24 werden die Temperaturen des Heizmoduls und/oder des Kühlmoduls erfasst und zweckmäßig gespeichert. Das Datenaufzeichnungssystem 24 kann auch integraler Bestandteil der Steuereinheit 23 sein. Die aufgezeichneten Temperaturen sind auslesbar. Beispielsweise kann eine (nicht gezeigte) Datenschnittstelle vorgesehen sein, die kabellos oder kabelgebunden sein kann. Auch ist es denkbar, dass die Temperaturdaten auf einem Datenträger gespeichert werden, der entnehmbar ist.

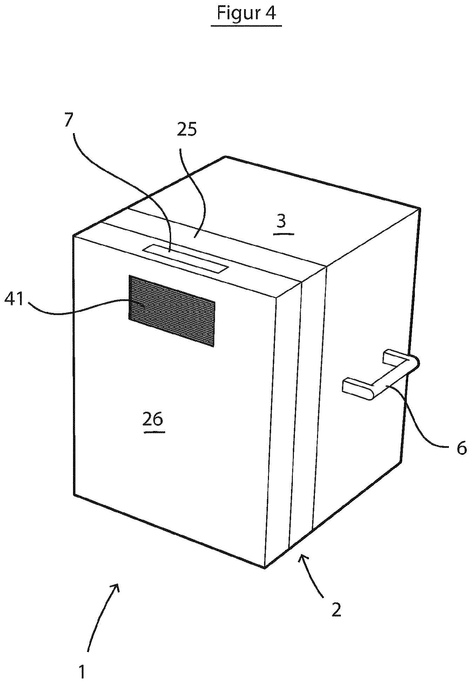

Figur 4 zeigt ein zweites Ausführungsbeispiel der erfindungsgemäßen Vorrichtung. Das zweite Ausführungsbeispiel ist dem ersten Ausführungsbeispiel in weiten Teilen ähnlich. Aus Übersichtsgründen werden für ähnliche Bauteile dieselben Bezugsziffern wie im ersten Ausführungsbeispiel verwendet, auch wenn sich die Bauteile geringfügig unterscheiden.

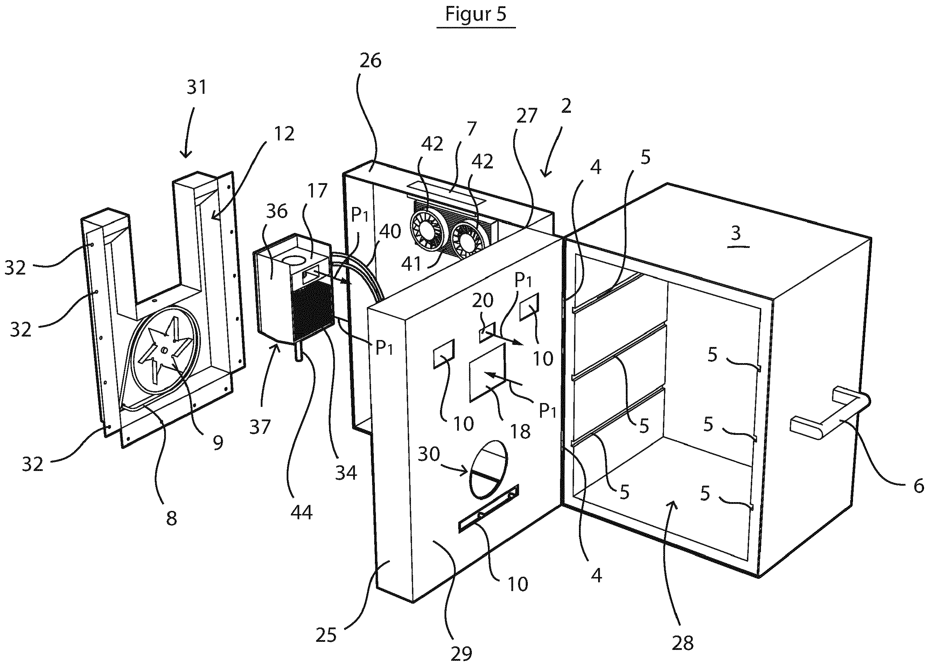

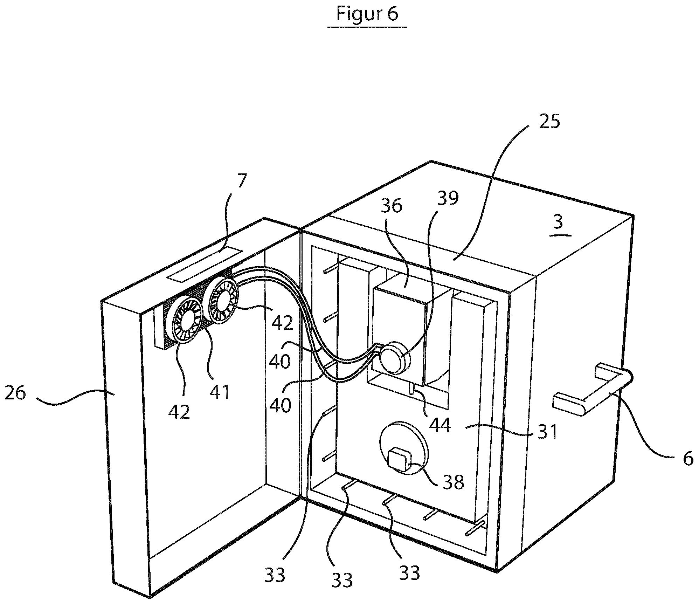

Das zweite Ausführungsbeispiel umfasst einen Behälter 1, der eine Tür 2 aufweist. Die Tür 2 ist mit einem Aufnahmekörper 3 schwenkbar verbunden, und zwar über Gelenke 4 (siehe Figur 6) .
Das zweite Ausführungsbeispiel unterscheidet sich von ersten Ausführungsbeispiel unter anderem dadurch, dass die Tür 2 teilbar ausgebildet ist. Sie weist einen Türkorpus 25 und eine Rückwand 26 auf. Die Rückwand 26 ist unabhängig von dem Türkorpus aufklappbar, wie es im Zusammenhang mit den Figuren 5 und 6 noch näher beschrieben wird.

Die Vorrichtung ist transportabel. Hierzu weist der Behälter 1 beidseitige Handgriffe 6 auf.

Mit dem Bezugszeichen 7 ist ein Display gekennzeichnet, mittels dessen die Vorrichtung programmiert werden kann, wie es im Folgenden noch näher ausgeführt wird. Das Display 7 kann auch als Anzeige für Fehlermeldungen etc. dienen. Die Anordnung des Displays 7 auf der Oberseite der Tür 2 ist rein exemplarisch. Es kann auch stirnseitig an der Tür 2 oder an dem Aufnahmekörper angeordnet sein. Vorliegend ist es in der Rückwand 26 ausgebildet.

Figur 5 zeigt die erfindungsgemäße Vorrichtung mit geöffneter Tür 2, wobei zusätzlich noch die Rückwand 26 geöffnet ist. Hierzu ist die Rückwand 26 mit dem Türkorpus 25 über mindestens ein Gelenk 27 verbunden, beispielsweise ein Scharnierband, das in Figur 5 lediglich angedeutet ist. Durch die öffenbare Rückwand sind sämtliche mechanischen und elektronischen Bauteile der Tür 2 besonders vorteilhaft zugänglich.

Die Tür 2 und der Aufnahmekörper 3 begrenzen (analog dem ersten Ausführungsbeispiel) einen Innenraum 28, in dem Speisen aufgenommen werden können. Im Innenraum 28 weist der Behälter 1 Schienen 5 auf, die lediglich schematisch angedeutet sind. In die Schienen 5 können Wannen oder dergleichen für die Speisen eingeschoben werden.

Die Tür 2 weist vorzugsweise eine Platte 29 auf, in der die erste(n) Einlassöffnung(en) 10, die Auslassöffnung 18 und die zweite(n) Einlassöffnung(en) 20 ausgebildet sind. Die Platte 29 weist ferner eine dem Gebläse zugeordnete Auslassöffnung 30 auf. Die Öffnungen 10, 18, 20, 30 können beispielsweise ausgelasert oder ausgestanzt sein. Sie können jeweils auch aus mehreren Einzelöffnungen bestehen.

Das Heizmodul umfasst vorteilhafterweise ein Gebläse 9 und ein Heizelement 8. Das Gebläse 9 und das Heizelement 8 sind an einem Aufsatz 31 befestigt. Der Aufsatz 31 begrenzt vorzugsweise den ersten Strömungskanal 12. Das Gebläse 9 und das Heizelement 8 sind vorteilhaft in dem Strömungskanal 12 angeordnet.

Vorzugsweise bilden der Aufsatz 31 und die Plate 29 den ersten Strömungskanal 12. Der Aufsatz 31 ist auf der Platte 29 befestigbar und weist hierzu Öffnungen 32 auf, die mit auf der Rückseite der Platte 29 angeordneten Gewindezapfen 33 zusammenwirken. Im montierten Zustand greifen die Gewindezapfen 33 durch die Öffnungen 32 hindurch, und der Aufsatz 31 kann auf der Platte 29 verschraubt werden.

Vorzugsweise sind der Aufsatz 31 und die Platte 29 aus Metall ausgebildet.

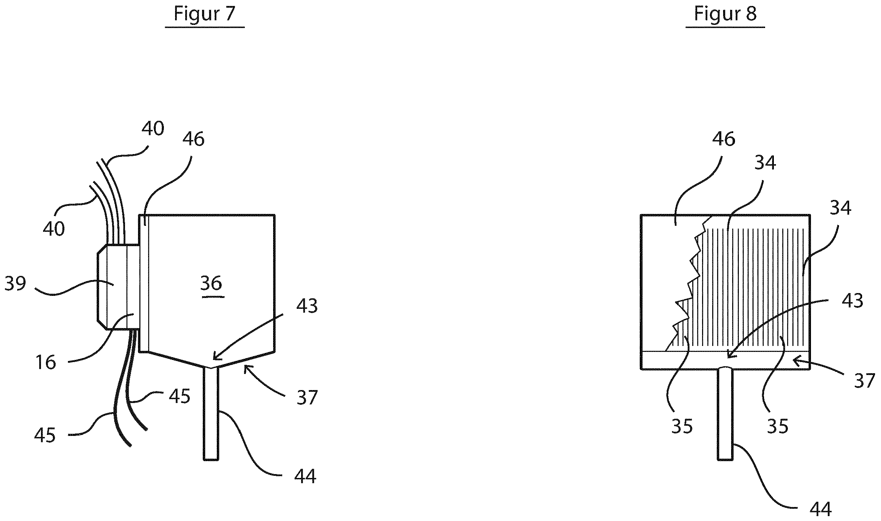

Das Kühlmodul umfasst vorzugsweise einen thermoelektrischen Wandler und ein Gebläse 17. Der thermoelektrische Wandler wird im Zusammenhang mit Figur 7 noch näher beschrieben und ist vorzugsweise als Peltier-Element ausgebildet, das auf einer Seite mit Kühlrippen 34 zusammenwirkt. Zwischen den Kühlrippen 34 sind Zwischenräume 35 ausgebildet, siehe Figur 8. Die Zwischenräume 35 und das Gebläse 17 definieren einen Strömungsweg. Die zu kühlende Luft wird durch die Auslassöffnung 18, die Zwischenräume 35 (an den Kühlrippen 34 vorbei), durch das Gebläse 17 und durch die Einlassöffnung 20 hindurchbewegt und damit gekühlt wieder in den Innenraum 28 abgegeben, wie es durch die Pfeile P1 gekennzeichnet ist. Auch eine umgekehrte Strömungsrichtung ist denkbar.

Vorzugsweise sind die Kühlrippen 34 und das Gebläse 17 in einem Gehäuse 36 aufgenommen. Hierdurch wird die Montage und Demontage vereinfacht.

Vorteilhafterweise weist das Gehäuse 36 eine Auffangwanne 37 für Kondensat auf, wie sie im Zusammenhang mit den Figuren 7 und 8 noch näher erläutert wird.

Figur 6 zeigt das zweite Ausführungsbeispiel mit einer geöffneten Rückwand 26. Der Türkorpus 25 ist geschlossen. Der Aufsatz 31 ist auf der Platte 29 befestigt. Das Gehäuse 36 ist ebenfalls auf der Platte 29 befestigt. Auf der Rückseite des Aufsatzes ist ein Antrieb 38 des Gebläses 9 angeordnet.

Wie es besonders gut aus Figur 6 ersichtlich ist, ist der thermoelektrische Wandler 16 (siehe Figur 7) wassergekühlt. Die Wasserkühlung weist eine Pumpe 39, Kühlmittelschläuche 40, einen Radiator 41 und Ventilatoren 42 auf. Sämtliche Elemente sind vorzugsweise in der Tür 2 angeordnet, wobei es ferner vorteilhaft ist, wenn der Radiator 41 in der Rückwand 26 sitzt.

Bei der Darstellung des zweiten Ausführungsbeispiels ist aus Übersichtsgründen die Dämmung weggelassen. Gleiches gilt für die übrigen elektronischen Bauteile wie Steuerung, Sensoren etc. Es versteht sich, dass mindestens zwischen dem Kühlmodul und dem Heizmodul eine Wärmedämmung angeordnet ist.

Bei der Kühlung der Luft kann Kondensat anfallen. Das Kondensat wird in der Auffangwanne 37 gesammelt. Hierzu sind die Kühlrippen 34 vorteilhaft (bei stehender Vorrichtung) vertikal angeordnet.

Die Auffangwanne 37 weist einen Ablauf 43 auf, durch den das Kondensat ablaufen kann (siehe Figuren 7 und 8). Mit dem Bezugszeichen 44 ist eine Leitung gekennzeichnet, durch die vorteilhaft das Kondensat dem Heizmodul zugeführt werden kann. Insbesondere kann die Leitung 44 direkt in den ersten Strömungskanal 12 gehen. Sie verbindet vorteilhaft das Kühlmodul mit dem Heizmodul. Sobald das Heizmodul aktiviert wird, verdampft das Kondensat.

Figur 7 zeigt ein Detail des zweiten Ausführungsbeispiels in schematischer Darstellung. Der thermoelektrische Wandler 16 ist als Peltier-Element ausgebildet. Es wird mittels elektrischer Leitungen 45 aktiviert. Auf der Rückseite wird der thermoelektrische Wandler 16 gekühlt, wie es durch die Pumpe 39 angedeutet ist. Zwischen den Kühlrippen 34 und dem thermoelektrischen Wandler 16 ist eine Platte 46 aus thermisch leitfähigem Material angeordnet, wie zum Beispiel Metall, die die Kühlwirkung des thermoelektrischen Wandlers 16 auf die Kühlrippen überträgt. Hierdurch kann eine große Kühlfläche erreicht werden. Die Platte 46 begrenzt worteilhaft den Strömungsweg der zu kühlenden Luft durch die Zwischenräume 35.

Figur 8 zeigt das Detail gemäß Figur 7 in einer Frontansicht. Zur besseren Darstellung der Platte 46 ist die Ansicht teilweise aufgebrochen. Zwischen den Kühlrippen 34 sind Zwischenräume 35 ausgebildet. Durch sie strömt vorteilhaft die zu kühlende Luft hindurch. Die Auffangwanne 37 wird vorteilhaft durch das Gehäuse 36 gebildet, wie es auch aus Figur 7 hervorgeht. Vorzugsweise weist die Auffangwanne Einlaufwände auf, die in Richtung des Ablaufs 43 schräg angestellt sind. Das Kondensat wird durch die Leitung 44 abgeführt, und zwar, wie vorstehend erläutert, vorzugsweise in das Heizmodul, beispielsweise in den ersten Strömungskanal 12.

### Bezugszeichenliste

- 1: Behälter
- 2: Tür
- 3: Aufnahmekörper
- 4: Gelenk
- 5: Schienen
- 6: Handgriff
- 7: Display
- 8: Heizelement
- 9: Gebläse
- 10: (erste) Einlassöffnung
- 11: (erste) Einlassöffnung
- 12: erster Strömungskanal
- 13: Sensor
- 14: Temperaturfühler
- 15: Kabel
- 16: Thermoelektrischer Wandler
- 17: Gebläse
- 18: Auslassöffnung
- 19: zweiter Strömungskanal
- 20: (zweite) Einlassöffnung
- 21: Sensor
- 22: Dämmung
- 23: Steuereinheit
- 24: Datenaufzeichnungssystem
- 25: Türkorpus
- 26: Rückwand
- 27: Gelenk
- 28: Innenraum
- 29: Platte
- 30: Auslassöffnung
- 31: Aufsatz
- 32: Öffnung
- 33: Gewindezapfen
- 34: Kühlrippen
- 35: Zwischenräume
- 36: Gehäuse
- 37: Auffangwanne
- 38: Antrieb
- 39: Pumpe
- 40: Kühlmittelschläuche
- 41: Radiator
- 42: Ventilator
- 43: Ablauf
- 44: Leitung
- 45: elektrische Leitung
- 46: Platte

- P1: Pfeil

## Patentansprüche

1. Verfahren zum Aufbewahren von vorzugsweise vorab zubereiteten Speisen, bei dem die Speisen in einen isolierten Behälter (1) eingebracht und aufbewahrt werden,
**dadurch gekennzeichnet,**
- **dass** die Speisen während der Aufbewahrung in dem Behälter (1) mit Hilfe eines Kühlmoduls (16; 17) des Behälters aktiv gekühlt werden, und
- **dass** die Speisen vor ihrer Entnahme aus dem Behälter mit Hilfe eines Heizmoduls (8; 9) des Behälters (1) aufgewärmt werden.

2. Verfahren nach Anspruch 1, **dadurch gekennzeichnet, dass** die Temperatur im Behälter (1) und/oder die Kerntemperatur der Speisen bis zur Entnahme der Speisen aus dem Behälter erfasst und aufgezeichnet wird.

3. Verfahren nach Anspruch 1 oder 2, **dadurch gekennzeichnet, dass** zum Kühlen und/oder Aufwärmen der Speisen entsprechend temperierte Luft in dem Behälter (1) zirkuliert wird, wobei vorzugsweise gekühlte Luft mindestens in einen oberen Bereich des Behälters und/oder aufgeheizte Luft mindestens in einen unteren Bereich des Behälters in einen Innenraum des Behälters eingeblasen wird.

4. Verfahren nach einem der vorhergehenden Ansprüche, **dadurch gekennzeichnet, dass** das Kühlen und/oder Aufwärmen der Speisen mit Hilfe einer programmierbaren Steuereinheit (23) des Behälters (1) gesteuert wird.

5. Verfahren nach einem der vorhergehenden Ansprüche, **dadurch gekennzeichnet, dass** das Kühlmodul (16; 17) oder das Heizmodul (8; 9) derart angesteuert wird, dass eine vorbestimmte Temperatur gehalten wird.

6. Verfahren nach einem der vorhergehenden Ansprüche, **dadurch gekennzeichnet, dass** vor der Aufbewahrung der Speisen eine Kühldauer und/oder eine Aufwärmdauer und/oder eine Kühltemperatur und/oder eine Aufwärmtemperatur eingestellt werden kann.

7. Vorrichtung zum Aufbewahren von vorzugsweise vorab zubereiteten Speisen, umfassend
- einen isolierten Behälter (1), der einen mit einer Tür (2) verschließbaren Innenraum (28) zur Aufnahme der Speisen aufweist,
- wobei der Behälter (1) ein Kühlmodul (16; 17) zum aktiven Kühlen der Speisen aufweist, und
- wobei der Behälter ferner ein Heizmodul (8; 9) zum Aufwärmen der Speisen aufweist.

8. Vorrichtung nach Anspruch 7, **dadurch gekennzeichnet, dass** das Kühlmodul (16; 17) mindestens einen thermoelektrischen Wandler (16), insbesondere ein Peltier-Element, und ein Gebläse (17), insbesondere ein Querstromgebläse, umfasst.

9. Vorrichtung nach Anspruch 8, **dadurch gekennzeichnet, dass** der thermoelektrische Wandler (16) als Peltier-Element ausgebildet ist, das auf einer Seite mit vorzugsweise vertikalen Kühlrippen (34) zusammenwirkt, wobei vorzugsweise das Peltier-Element auf seiner anderen Seite mit einer Wasserkühlung zusammenwirkt, die eine Pumpe (39), Kühlmittelschläuche (40) und mindestens einen Radiator (41) umfasst, der vorzugsweise an einer Außenseite der Tür (2) angeordnet ist.

10. Vorrichtung nach Anspruch 9, **dadurch gekennzeichnet, dass** zwischen den Kühlrippen (34) Zwischenräume (35) ausgebildet sind, die zusammen mit dem Gebläse (17) einen Strömungsweg definieren und dass vorzugsweise zwischen dem Peltier-Element und den Kühlrippen eine Platte (46) ausgebildet ist, die den Strömungsweg begrenzt.

11. Vorrichtung nach einem der Ansprüche 8 bis 10, **dadurch gekennzeichnet, dass** in der Tür (2) ein zweiter Strömungskanal (19) angeordnet ist, der den thermoelektrischen Wandler (16) und das Gebläse (17) miteinander strömungstechnisch verbindet.

12. Vorrichtung nach einem der Ansprüche 7 bis 11, **dadurch gekennzeichnet, dass** das Kühlmodul (16; 17) eine Auffangwanne (37) zum Auffangen von Kondensat des Kühlmoduls aufweist.

13. Vorrichtung nach einem der Ansprüche 7 bis 12, **dadurch gekennzeichnet, dass** das Heizmodul (8; 9) mindestens ein Heizelement (8), insbesondere einen Heizstab oder eine Heizspirale oder eine Heizwendel, und ein Gebläse (9), insbesondere ein Axialgebläse, umfasst.

14. Vorrichtung nach Anspruch 13, **dadurch gekennzeichnet, dass** in der Tür (2) ein erster Strömungskanal (12) angeordnet ist, der das Heizelement (8) und das Gebläse (9) strömungstechnisch miteinander verbindet, wobei das Heizelement und das Gebläse vorzugsweise in dem ersten Kanal angeordnet sind/ist.

15. Vorrichtung nach Anspruch 12 und 14, **dadurch gekennzeichnet, dass** die Auffangwanne (37) mindestens einen Ablauf (43) für das Kondensat aufweist und dass der Ablauf mit dem ersten Strömungskanal (12) verbunden ist.

16. Vorrichtung nach einem der Ansprüche 7 bis 15, **dadurch gekennzeichnet, dass** das Kühlmodul (16; 17) und/oder das Heizmodul (8; 9) in der Tür (2) des Behälters (1) angeordnet sind.

17. Vorrichtung nach einem der Ansprüche 7 bis 16, **dadurch gekennzeichnet,**
- **dass** in der Tür (2) mindestens eine erste Einlassöffnung (10; 11) zum Innenraum (28) des Behälters hin ausgebildet ist, die dem Heizmodul (8; 9) zugeordnet ist, und/oder
- **dass** in der Tür (2) mindestens eine zweite Einlassöffnung (20) zum Innenraum (28) des Behälters hin ausgebildet ist, die dem Kühlmodul (16; 17) zugeordnet ist,
- wobei vorzugsweise vorgesehen ist, dass die erste Einlassöffnung (10; 11) und/oder die zweite Einlassöffnung (20) in einer dem Innenraum (28) zugewandten Platte (29) der Tür (2) ausgebildet sind/ist.

18. Vorrichtung nach Anspruch 14 und 17, **dadurch gekennzeichnet, dass** der erste Strömungskanal (12) durch einen Aufsatz (31) begrenzt wird, der mit der Platte (29) lösbar verbunden ist, und dass vorzugsweise an dem Aufsatz das Gebläse (9) und/oder das Heizelement (8) angeordnet, insbesondere befestigt, sind/ist.

19. Vorrichtung nach Anspruch 17, **dadurch gekennzeichnet, dass** die zweite Einlassöffnung (20) im oberen Bereich der Tür (2) angeordnet ist und/oder dass die erste Einlassöffnung (11) im unteren Bereich der Tür (2) angeordnet ist.

20. Vorrichtung nach einem der Ansprüche 7 bis 19, **gekennzeichnet durch** mindestens einen Temperatursensor (13) zum Erfassen der Temperatur im Behälter (1) und/oder mindestens einen Temperaturfühler (14) zum Erfassen der Kerntemperatur der Speisen sowie vorzugsweise ferner ein Datenaufzeichnungssystem (24) zum Aufzeichnen der erfassten Temperaturdaten.
